# EUROPÄISCHE PATENTSCHRIFT

(11) **EP 0 980 902 B1**
(45) Veröffentlichungstag und Bekanntmachung des Hinweises auf die Patenterteilung: **26.03.2003**
(21) Anmeldenummer: 99115000.4
(22) Anmeldetag: 31.07.1999
(51) Int. Cl.: C09J 7/02

(54) **Einseitig selbstklebendes, wärmeaktivierbares Klebeband und seine Verwendung**
Heat-activable, on one side self-adhesive tape and use thereof
Ruban adhésif thermofusible, autocollant monoface et son utilisation

(30) Priorität: 17.08.1998 DE 19837143
(43) Veröffentlichungstag der Anmeldung: 23.02.2000
(73) Patentinhaber: Tesa AG, 20253 Hamburg (DE)
(72) Erfinder: Zimmermann, Dieter, 21635 Jork (DE); Kehler, Harald, Dr., 21109 Hamburg (DE); Schulze, Walter, 25421 Pinneberg (DE)

(56) Entgegenhaltungen:
- EP-A- 0 384 598
- WO-A-95/13184
- DE-A- 3 331 016
- US-A- 5 389 409

## Beschreibung

Die Erfindung betrifft ein einseitig klebendes, viskoelastisches , wärmeaktivierbares Klebeband und seine Verwendung zum Verkleben von EPDM-Teilen.

Einseitig selbstklebendes, wärmeaktivierbare Klebebänder sind bekannt und im Handel erhältlich. Sie werden bevorzugt in der Automobilindustrie zum Einkleben von EPDM-Profilgummidichtungen im Türrahmenbereich eingesetzt. Die dazu eingesetzten Produkte (z.B. 3M Automotive Structural Sealing Tape ®) zeigen einen Laminat-Aufbau mit Siegelmasse, Schaumstoff und Selbstkleber. Bei der Anwendung kommt es aber aufgrund von Stauchungen vor allen Dingen im Kurvenbereich nach einiger Zeit zu Ablöseerscheinungen.

Somit war es Aufgabe der Erfindung, hier Abhilfe zu schaffen, also ein Produkt zur Verfügung zu stellen, das mit guter EPDM-Haftung (nach Wärmeaktivierung z.B. 1 Min./160°C) vor allen Dingen im Kurvenbereich optimale PSA-Haftung auf dem lackierten Blech erreicht.

Gelöst wird dies durch ein Klebeband, wie dies näher in den Ansprüchen gekennzeichnet ist.

Der Aufbau dieses Klebebandes zeigt also ein Laminat aus zwei Komponenten, zum einen ein wärmeaktivierbarer Klebfolienstreifen, zum anderen ein doppelseitig klebendes Selbstklebeband, ein sog. Fix.

Erfindungsgemäß geeignet sind als Reaktivharz insbesondere Alkylphenolharze, die insbesondere basenreaktiv sind, wie sie als Klebstoffe auf Basis Polychloropren im Handel sind, z.B. als Alresen® PA 565 (Hoechst), während zu den weiteren Bestandteilen des Klebfolienstreifens insbesondere auf DE 33 31 016 Bezug genommen wird.

Im folgenden soll die Erfindung anhand von Beispielen erläutert werden, ohne sie jedoch unnötig einschränken zu wollen. Auch die Verwendung ist aus den Beispielen zu ersehen, ebenso die Herstellung der Bänder.

### Beispiel 1

Zunächst wird ein wärmeaktivierbarer Folienstreifen wie folgt hergestellt:

In einer Rezeptur wurde das reaktive Alkylphenolharz (Alresen PA 565) der Fa. Hoechst mit eingesetzt (für Pentalyn H, Fa. Hercules), alles in Gewichtsteilen:

| | |
|---|---|
| 53,5 Cariflex TR 1101 | Shell |
| 25,2 Pentalyn H | Hercules |
| 16,9 Alresen PA 565 | Hoechst |
| 2,2 Kronos 2160 - TiO₂ | Kronos |
| 2,2 Maglite DE - MgO | Merck |

Die Herstellung erfolgte ohne Alresen PA 565 bei 180° C in Kneter mit CO₂ Einleitung. Danach wurde auf 150°C gekühlt, Alresen PA 565 zugegeben und kurz homogen eingearbeitet. Die Masse wurde extrudiert zu einer 0,4 mm dicken Folie, die einseitig mit Trennpapier abgedeckt und zu Rollen geschnitten wurde.

Auf die extrudierte hitzeaktivierbare Klebfolie wird ein trägerloses "tesafix"-4985® (ca. 40 µm dick, mit Acrylatkleber) kalt kaschiert. Bei der nachfolgenden Verklebung mit einem EPDM_Dichtungsprofil durch Wärmeaktivierung (1Min./160°C) kommt es dann zu einem innigen Verbund von Klebfolie und -Fix. Das so ausgerüstete Profil ist gut geeignet, als Türdichtung in eine Autokarosserie auf lackierte Oberflächen, insbesondere im Türrahmen geklebt zu werden. Dabei kommt es zu keinerlei Ablösung in Kurvenbereichen, auch bei längerer Anwendung.

### Beispiel 2

Wie in Beispiel 1 wird auf die dort beschriebene Klebfolie eine Lösungsmittel-PSA-Masse (druckempfindliches Acrylat) aufgeraktelt (ca. 30 g fest/m²). Bedingt durch das Lösungsmittel (Benzin) kommt es schon jetzt zu einem guten Verbund zwischen Klebfolie und PSA-Masse. Weiterverwendung und Ergebnis wie in Beispiel 1.

### Beispiel 3

Die Klebfolie gemäß Beispiel 1 wird mit einer wäßrigen, druckempfindlichen Acrylat-Dispersion beschichtet (Drahtrakelverfahren mit Neotac 5486, Fa. Zeneca). Bei der Hitzeaktivierung (Verbund mit dem EPDM-Profil) 1 Min./160°C kommt es dann zu einer guten Verankerung, wie sich bei weiterer Verwendung gemäß Beispiel 1 zeigt.

### Beispiel 4

Aus 2 Extrudern wird

| | |
|---|---|
| 1 | die Klebfolie gemäß Beispiel 1 und |
| 2 | ein selbstklebendes Acrylat-Hotmelt (aus der Schmelze zu beschichtende, lösungsmittelfreie Acrylatmasse) in eine 2-Kanaldüse gefördert und durch Co-Extrusion auf Trennpapier beschichtet, wobei eine optimale Verankerung erzielt wird. Weitere Vrewendung und Ergebnis wie in Bespiel 1. Dabei ist in allen Bespielen kein Primer erforderlich. |

Der hervorragende Verbund zwischen EPDM und dem erfindungsgemäßen Klebeband zeigt sich wie folgt:
Käufliche EPDM-Platten (4mm Dicke, Shorehärte: A 70 v.d. Firma H. Wegner, HH) werden mit einem Klebfolienstreifen wie es in Beispiel 1 vor dem Kaschieren mit dem Fix beschrieben ist, verklebt, jeweils 1 Min. unter leichtem Andruck in einer beheizten Presse. Ergebnis:
   bei 150°C = Klebfolienstreifen nur schwer abziehbar (ca. 13 N/cm)
   bei 160°C = teilweise EPDM-Ausriß (ca. 15N/cm)
   bei 180°C = kein Abziehen möglich

In allen Fällen ist also die Adhäsion zwischen EPDM und hitzeaktivierbarer Klebfolienstreifenseite wesentlich höher (auch nach 1 Woche/40°C-Lagerung keine Reduzierung der Haftfestigkeit) als die PSA-Haftung auf z.B. lackierten Blechen (ca. 5 N/cm).

Die erfindungsgemäße Verwendung zum Verkleben von EPDM-Teilen führt auch zu beachtlichen Vorteilen bei der späteten Entsorgung oder Reparatur, indem sich nämlich die gesamte Dichtung etwa aus einem Auto herausreißen läßt, dann aber dieser EPDM-Klebeband-Verbund sich trennen läßt durch sog. Abstrippen, also durch Ziehen am Klebeband in Richtung der Verklebungsebene, zur sortenreinen Rückgewinnung des EPDM-Teils einerseits und des Klebebandes andererseits, worauf der EPDM-Teil ggf. erneut verwendet werden kann.

## Patentansprüche

1. Einseitig selbstklebendes, wärmeaktivierbares Klebeband, **gekennzeichnet durch**
a) einen wärmeaktivierbaren, doppelseitig klebenden Klebfolienstreifen auf der Basis von thermoplastischem Kautschuk, klebrigmachendem Harz und Reaktivharz, einem
b) einseitig darauf kaschierten, doppelseitig klebenden Selbstklebeband, und
c) ggf. Trennpapier bzw. eine Trennfolie auf einer Seite des Klebebandes.

2. Klebeband nach Anspruch 1, **dadurch gekennzeichnet, daß** der Klebfolienstreifen ein solcher aus einer Klebmasse auf Basis von
a) thermoplastischem Kautschuk und
b) klebrigmachenden Harzen, wobei der Klebfolienstreifen
c) hohe Elastizität und
d) geringe Plastizität aufweist und wobei
e) die Adhäsion geringer als die Kohäsion ist,
f) das Haftvermögen beim Dehnen weitgehend verschwindet,
g) das Verhältnis von Abzugskraft zu Reißlast 1:1,5 oder größer ist, und wobei
h) eine damit hergestellte Klebbindung durch Ziehen in Richtung der Verklebungsebene lösbar ist, und
i) die Klebmasse ein Reaktivharz zugemischt enthält.

3. Klebeband nach Anspruch 1, **dadurch gekennzeichnet, daß** das Reaktivharz ein durch Wärme aktivierbares Harz, insb. ein solches Alkylphenolharz ist.

4. Klebeband nach Anspruch 1, **dadurch gekennzeichnet, daß** das Reaktivharz von 10 bis 30 Gew. %, insb. von 15 bis 25 Gew.% der Klebmasse des Klebfolienstreifens ausmacht.

5. Klebeband nach Anspruch 1, **dadurch gekennzeichnet, daß** das Reaktivharz zusammen mit einem Metalloxid, insb. Magnesiumoxid eingesetzt wird.

6. Klebeband nach Anspruch 4, **dadurch gekennzeichnet, daß** das Metalloxid 1 bis 3 Gew. %, insb. von 1,5 bis 2,5 Gew. % der Klebmasse des Klebfolienstreifens ausmacht.

7. Klebeband nach Anspruch 1, enthaltend im Klebfolienstreifen als thermoplastischen Kautschuk ein Styrol-Butadien-Blockpolymer und als klebrigmachenden Harz ein Colophonium-Derivat.

8. Klebeband nach Anspruch 1, **dadurch gekennzeichnet, daß** das aufkaschierte doppelseitig klebende Selbstklebeband ein druckempfindliches Haftklebeband mit Kleber auf Acrylat-Basis ist.

9. Klebeband nach Anspruch 1, **dadurch gekennzeichnet, daß** das der Klebfolienstreifen 0,4 bis 0,8 mm dick ist und das aufkaschierte Selbstklebeband 0,02 bis 0,1 mm dick ist.

10. Verwendung eines Klebebandes nach einem der Ansprüche 1 bis 9 zum Verkleben von EPDM-Teilen, insb. in Kfz-Türrahmen, wobei zunächst das EPDM-Teil mit der wärmeaktivierbaren Klebfolienstreifenseite des Klebebandes heiß verklebt wird und dann der erhaltene Verbund mit der selbstklebenden Seite verklebt wird, insb. in einem Kfz-Türrahmen.

## Claims

1. Heat-activatable single-sided self-adhesive tape, **characterized by**
a) a heat-activatable double-sided adhesive film strip based on thermoplastic rubber, tackifier resin and reactive resin,
b) a double-sided self-adhesive tape laminated onto one side of the said strip, and
c) if desired, release paper or a release film on one side of the adhesive tape.

2. Adhesive tape according to Claim 1, **characterized in that** the adhesive film strip comprises an adhesive composition based on
a) thermoplastic rubber and
b) tackifier resins, the adhesive film strip having
c) high elasticity and
d) low plasticity and
e) the adhesion being lower than the cohesion,
f) the adhesion largely disappearing on extension,
g) the ratio of peel strength to tensile strength being 1:1.5 or more, and
h) an adhesive bond produced with such a tape being partable by pulling in the direction of the bond plane, and
i) the adhesive composition comprising an admixed reactive resin.

3. Adhesive tape according to Claim 1, **characterized in that** the reactive resin is a heat-activatable resin, especially a heat-activatable alkylphenol resin.

4. Adhesive tape according to Claim 1, **characterized in that** the reactive resin makes up from 10 to 30% by weight, especially from 15 to 25% by weight, of the adhesive composition of the adhesive film strip.

5. Adhesive tape according to Claim 1, **characterized in that** the reactive resin is employed together with a metal oxide, especially magnesium oxide.

6. Adhesive tape according to Claim 4, **characterized in that** the metal oxide makes up from 1 to 3% by weight, especially from 1.5 to 2.5% by weight, of the adhesive composition of the adhesive film strip.

7. Adhesive tape according to Claim 1, comprising as thermoplastic rubber in the adhesive film strip a styrene-butadiene block polymer and as tackifier resin a rosin derivative.

8. Adhesive tape according to Claim 1, **characterized in that** the double-sided self-adhesive tape that is laminated on is a pressure-sensitive adhesive tape with an acrylate-based adhesive.

9. Adhesive tape according to Claim 1, **characterized in that** the adhesive film strip is from 0.4 to 0.8 mm thick and the self-adhesive tape that is laminated on is from 0.02 to 0.1 mm thick.

10. Use of an adhesive tape according to one of Claims 1 to 9 for bonding EPDM parts, especially in motor vehicle doorframes, where first of all the EPDM part is bonded under the action of heat with the heat-activatable adhesive film strip side of the adhesive tape and then the resulting assembly is bonded by the self-adhesive side, especially in a motor vehicle doorframe.

## Revendications

1. Bande adhésive auto-collante d'un côté, pouvant être activée par la chaleur, **caractérisée par**
a) une bande de film adhésif collante des deux côtés, pouvant être activée par la chaleur, à base d'un caoutchouc thermoplastique, d'une résine qui rend adhésif et d'une résine réactive,
b) une bande auto-adhésive collante des deux côtés, encollée d'un côté sur celle-ci et
c) le cas échéant un papier de séparation ou, selon le cas, un film de séparation d'un côté-de la bande adhésive.

2. Bande adhésive selon la revendication 1, **caractérisée en ce que** la bande de film adhésif contient une bande adhésive constituée d'une masse adhésive à base
a) de caoutchouc thermoplastique et
b) de résines qui rendent adhésif, la bande de film adhésif présentant
c) une élasticité élevée et
d) une faible plasticité et
e) l'adhérence étant inférieure à la cohésion,
f) le pouvoir adhésif disparaissant dans une large mesure lors de l'allongement,
g) le rapport forcé de traction à résistance à la rupture étant de 1:1,5 ou plus et
h) la liaison adhésive réalisée avec celle-ci pouvant être détachée par traction dans le sens du plan de collage, et
i) la masse adhésive contenant en mélange une résine réactive.

3. Bande adhésive selon la revendication 1, **caractérisée en ce que** la résine réactive est une résine pouvant être activée par la chaleur, en particulier une résiné alkylphénolique pouvant être activée par la chaleur.

4. Bande adhésive selon la revendication 1, **caractérisée en ce que** la résine réactive constitue 10 à 30% en poids, en particulier 15 à 25% en poids, de la masse adhésive de la bande de film adhésif.

5. Bande adhésive selon la revendication 1, **caractérisée en ce que** la résine réactive est utilisée conjointement avec un oxyde de métal, en particulier l'oxyde de magnésium.

6. Bande adhésive selon la revendication 4, **caractérisée en ce que** l'oxyde de métal constitue 1 à 3% en poids, en particulier 1,5 à 2,5% en poids, de la masse adhésive de la bande de film adhésif.

7. Bande adhésive selon la revendication 1, contenant dans la bande de film adhésif, comme caoutchouc thermoplastique, un copolymère à blocs de styrène et de butadiène et comme résine qui rend adhésif un dérivé de colophane.

8. Bande adhésive selon la revendication 1, **caractérisée en ce que** la bande auto-adhésive collante des deux côtés encollée est une bande auto-adhésive sensible à la pression présentant une colle à base d'acrylate.

9. Bande adhésive selon la revendication 1, **caractérisée en ce que** la bande de film adhésif présente une épaisseur de 0,4 à 0,8 mm et la bande auto-adhésive encollée présente une épaisseur de 0,02 à 0,1 mm.

10. Utilisation d'une bandé adhésive selon l'une quelconque des revendications 1 à 9 pour le collage de pièces en EPDM, en particulier dans des cadres de porte de véhicules automobiles, la pièce en EPDM étant d'abord collée à chaud avec le côté de la bande de film adhésif pouvant être activée par la chaleur de la bande adhésive puis l'assemblage obtenu étant collé avec le côté auto-adhésif, en particulier dans un cadre de porte de véhicule automobile.
